# EUROPÄISCHE PATENTSCHRIFT

(11) **EP 4 155 633 B1**
(45) Veröffentlichungstag und Bekanntmachung des Hinweises auf die Patenterteilung: **26.02.2025**
(21) Anmeldenummer: 22189774.7
(22) Anmeldetag: 10.08.2022
(51) Int. Cl.: F25D 17/04, F16K 15/14, F16K 24/06, F16K 49/00

(54) **BELÜFTUNGSEINHEIT FÜR EINEN KÜHLSCHRANK**
VENTILATION UNIT FOR A REFRIGERATOR
UNITÉ DE VENTILATION POUR UN RÉFRIGÉRATEUR

(30) Priorität: 27.09.2021 DE 102021124960
(43) Veröffentlichungstag der Anmeldung: 29.03.2023
(73) Patentinhaber: Binder GmbH, 78532 Tuttlingen (DE)
(72) Erfinder: Huber, Sebastian, 78583 Böttingen (DE); Pepler, Alexander, 78166 Donaueschingen (DE)
(74) Vertreter: Westphal, Mussgnug & Partner Patentanwälte mbB

(56) Entgegenhaltungen:
- WO-A1-2016/089034
- WO-A1-2020/005698
- DE-A1- 3 127 749
- DE-B3- 102015 201 772
- JP-A- 2010 169 346
- KR-U- 19990 010 685
- US-A1- 2020 224 396

## Beschreibung

Die Erfindung betrifft eine Belüftungseinheit nach Anspruch für einen Kälteschrank.

Ein bekanntes Problem bei Kälteschränken wie Kühlschränken, Tiefkühlschränken und insbesondere Ultratiefkühlschränken, welche im Innenraum Temperaturen von etwa -90°C erreichen können, besteht darin, dass bei einem Öffnen der Tür des Kälteschranks ein Luftaustausch stattfindet und warme Luft in den Innenraum strömt. Wird die Tür wieder geschlossen, kühlt sich die Luft im Inneren stark ab und zieht sich dadurch zusammen, so dass ein Unterdruck entsteht. Dieser Unterdruck muss ausgeglichen werden, da sich die Tür des Kälteschranks ab einem bestimmten Unterdruck nicht öffnen lässt oder der Kälteschrank beim Öffnen beschädigt werden kann.

Bekannt ist eine Belüftungseinheit für einen Kälteschrank, welche ein beheiztes Rohr beispielsweise aus Edelstahl aufweist, in dessen Inneren ein Drahtgeflecht angeordnet ist. Das Rohr ist horizontal in die Tür oder eine Seitenwand des Kälteschranks eingebaut. Bei Öffnen der Tür wird die Heizung aktiviert und das eventuell zugefrorene Rohr abgetaut, so dass Luft durch das Rohr strömen und die Druckdifferenz ausgeglichen werden kann. Dafür werden etwa 30 Sekunden benötigt, bis die Tür wieder geöffnet werden kann.

Als weiterer Stand der Technik werden die DE 31 27749 A1, die WO 2016/089034 A1, die KR 1999 0010685 U, die DE 10 2015 201772 B3, die US 2020/224396 A1, JP2010169346A sowie die WO 2020/005698 A1 genannt.

Die Aufgabe der Erfindung besteht darin, eine Belüftungseinheit für einen Kälteschrank bereitzustellen, durch welche die Zeitdauer, die nach einer Türöffnung bis zu einer weiteren Türöffnung erforderlich ist, möglichst kurz ausgebildet ist und es vorzugsweise ermöglicht wird, die Tür nach einer Öffnung direkt nochmals zu öffnen.

Die Aufgabe wird erfindungsgemäß gelöst durch eine Belüftungseinheit für einen Kälteschrank mit den Merkmalen des Anspruchs 1.

Vorteilhafte Ausgestaltungen und Weiterbildungen der Erfindung sind in den abhängigen Ansprüchen angegeben.

Die erfindungsgemäße Belüftungseinheit für einen Kälteschrank umfasst einen rohrförmigen Grundkörper, wobei der Grundkörper ein Heizelement aufweist, und wobei der Grundkörper ein einlassseitiges Ende mit einer Einlassöffnung und ein auslassseitiges Ende mit einer Auslassöffnung aufweist, wobei der Grundkörper derart sich verjüngend ausgebildet ist, dass die Einlassöffnung eine größere Fläche aufweist als die Auslassöffnung, wobei die Einlassöffnung in einer ersten stirnseitigen Ebene und die Auslassöffnung in einer zweiten stirnseitige Ebene angeordnet sind, wobei die erste stirnseitige Ebene und die zweite stirnseitige Ebene im Wesentlichen parallel versetzt zueinander angeordnet sind, und wobei bei senkrechter Projektion der ersten stirnseitigen Ebene auf die zweite stirnseitige Ebene die Einlassöffnung und die Auslassöffnung versetzt zueinander angeordnet sind, und wobei in dem Grundkörper ein mechanisches Ventil angeordnet ist, welches derart ausgebildet ist, dass es bei Überschreiten einer vorgegebenen Druckdifferenz zwischen dem einlassseitigen Ende und dem auslassseitigen Ende mit einem Unterdruck am auslassseitigen Ende druckbedingt öffnet, einen Luftstrom vom auslassseitigen Ende zum einlassseitigen Ende jedoch unterbindet.

Als versetzte Anordnung von Einlassöffnung und Auslassöffnung soll eine Anordnung zu verstehen sein, bei welcher die Schnittmenge von Einlassöffnung und Auslassöffnung in der Projektion kleiner als die Auslassöffnung ist. Dabei sind die Einlassöffnung und die Auslassöffnung nicht konzentrisch angeordnet. Dadurch, dass bei senkrechter Projektion der ersten stirnseitigen Ebene auf die zweite stirnseitige Ebene die Einlassöffnung und die Auslassöffnung versetzt zueinander angeordnet sind, ergibt sich in der Einbausituation eine Neigung des Grundkörpers. Insbesondere erfolgt der Einbau derart, dass die Auslassöffnung, welche insbesondere die kalte Seite der Belüftungsanordnung bildet, weiter unten liegt als die Einlassöffnung. Durch den Höhenversatz kann sich eine stabile Luftschichtung in dem Grundkörper einstellen, welche dazu führen kann, dass das Ventil auch wenn das Heizelement nicht dauerhaft eingeschaltet ist frostfrei bleiben kann. Dies ermöglicht einen Druckausgleich auch kurz nach dem Öffnen der Tür. Dadurch, dass sich der Grundkörper zur Auslassöffnung verjüngt, erhöht sich die Flussgeschwindigkeit des Massestroms zur Auslassöffnung hin, welche sich eventuell bildendes Kondenswasser mittragen kann, wodurch die Gefahr der Eisbildung innerhalb des Grundkörpers verringert werden kann.

Das mechanische Ventil weist den Vorteil auf, dass es keine zusätzliche Stromversorgung benötigt und ausschließlich auf die Druckdifferenz reagiert.

Gemäß einer vorteilhaften Weiterbildung ist vorgesehen, dass bei senkrechter Projektion der ersten stirnseitigen Ebene auf die zweite stirnseitige Ebene die Einlassöffnung und die Auslassöffnung derart versetzt zueinander angeordnet sind, dass sie keine Schnittmenge bilden. In der Einbausituation bedeutet dies insbesondere, dass der Höhenversatz zwischen Einlassöffnung und Auslassöffnung so groß ist, dass ein horizontales Durchschauen nicht möglich ist. Eine derartige Anordnung kann die Ausbildung einer stabilen Luftschichtung begünstigen.

Vorzugsweise weist das Ventil einen Ventilsitz und einen Ventilkörper auf, wobei der Ventilkörper scheibenförmig ausgebildet ist. Ein derartiges Ventil kann besonders kompakt ausgebildet sein.

Vorteilhafterweise ist der scheibenförmige Ventilkörper gegen die erste stirnseitige Ebene geneigt angeordnet. Der Ventilkörper kann dadurch besonders günstig von dem Luftstrom angeströmt werden.

Gemäß einer vorteilhaften Weiterbildung der Erfindung weist der Grundkörper eine Längsachse auf, und der scheibenförmige Ventilkörper ist im Wesentlichen senkrecht zur Längsachse angeordnet ist. Eine derartige Anordnung ermöglicht eine gleichmäßige Beaufschlagung des Ventilkörpers durch die anliegende Druckdifferenz.

Eine bevorzugte Weiterbildung der Erfindung sieht vor, dass der Ventilkörper vorgespannt gelagert in einer geschlossenen Position gehalten ist. Dies ermöglicht einen konstruktiv einfachen und kompakten Aufbau des Ventils.

Besonders bevorzugt ist der Ventilkörper als Schirmventil ausgebildet. Dadurch kann eine ausreichende Empfindlichkeit der Belüftungseinheit erreicht werden.

Vorteilhafterweise ist der Ventilkörper aus Silikon gefertigt.

Vorzugsweise weist der Ventilkörper eine Rotationsachse, welche im Wesentlichen parallel zur Luftströmungsrichtung durch den Grundkörper ausgerichtet ist. Dadurch kann eine gleichmäßige Beaufschlagung des Ventilkörpers erreicht werden.

Gemäß einer besonders bevorzugten Ausgestaltung der Erfindung sind in dem Grundkörper zwei Ventile angeordnet. Dadurch kann die Empfindlichkeit der Belüftungseinheit erhöht werden und der Volumenstrom vergrößert werden.

Eine bevorzugte Ausgestaltung der Erfindung sieht vor, dass die Rotationsachsen der Ventilkörper der beiden Ventile nicht parallel zueinander ausgerichtet sind, wobei vorzugsweise der Winkel zwischen den beiden Rotationsachsen zwischen 15° und 35° beträgt. Dadurch können die beiden Ventilkörper in dem sich verjüngenden Rohr jeweils derart angeordnet werden, dass jeder der Ventilkörper im Wesentlichen mit seiner Rotationsachse parallel zum Luftstrom ausgerichtet angeordnet ist.

Vorzugsweise ist das Heizelement auf der Außenseite des Grundkörpers angeordnet, was die Herstellung der Belüftungseinheit vereinfachen kann.

Gemäß einer bevorzugten Ausführungsform der Erfindung weist die Außenseite des Grundkörpers Strukturen zur Lagefixierung des Heizelements, insbesondere Rillen und/oder Vorsprünge, auf. Das Heizelement kann dadurch auf einfache Art und Weise in seiner Lage fixiert werden.

Vorteilhafterweise ist der Grundkörper aus einem Kunststoff, insbesondere aus einem thermoplastischen Kunststoff, besonders bevorzugt aus Polypropylen, gefertigt, vorzugsweise im Spritzgussverfahren, was eine einfache und kostengünstige Fertigung ermöglichen kann.

Eine besonders bevorzugte Ausgestaltung der Erfindung sieht vor, dass das Heizelement als Heizdraht ausgebildet ist. Die Herstellung kann dadurch weiter vereinfacht werden, indem der Heizdraht lediglich auf er Außenseite des aus Kunststoff gefertigten Grundkörpers angeordnet wird.

Vorteilhafterweise umfasst der Grundkörper zwei Halbschalen. Eine derartige Ausgestaltung lässt sich besonders einfach insbesondere im Spritzgussverfahren fertigen und kann die Montage vereinfachen.

Ein erfindungsgemäßer Kälteschrank, insbesondere Kühlschrank, Tiefkühlschrank oder Ultratiefkühlschrank, weist eine Belüftungseinheit nach Anspruch 1 wie zuvor beschrieben auf. Vorzugsweise ist die Belüftungseinheit derart in einer Wandung des Kälteschranks eingebaut, dass die Einlassöffnung zur Außenseite, das heißt zur warmem Seite, und die Auslassöffnung zur Innenseite, das heißt zur kalten Seite, des Kälteschranks gerichtet sind, wobei die Auslassöffnung in vertikaler Richtung weiter unten angeordnet ist als die Einlassöffnung. Besonders bevorzugt ist die Auslassöffnung vertikal unterhalb der Einlassöffnung angeordnet.

Ein Ausführungsbeispiel der Erfindung wird anhand der nachfolgenden Figuren ausführlich erläutert. Es zeigen:
- Figur 1: eine perspektivische Ansicht eines Ausführungsbeispiels einer erfindungsgemäßen Belüftungseinheit für einen Kälteschrank,
- Figur 2: eine Seitenansicht der Belüftungseinheit gemäß Fig. 1,
- Figur 3: eine Draufsicht auf die Belüftungseinheit gemäß Fig. 1,
- Figur 4: eine Vorderansicht der Belüftungseinheit gemäß Figur 1,
- Figur 5: einen Längsschnitt in Seitenansicht durch die Belüftungseinheit gemäß Figur 1,
- Figur 6: einen Längsschnitt in Draufsicht durch die Belüftungseinheit gemäß Figur 1,
- Figur 7: den Längsschnitt gemäß Figur 5 mit eingezeichneter Längsachse des Grundkörpers,
- Figur 8: den Längsschnitt gemäß Figur 5 mit eingezeichneter Projektionsrichtung,
- Figur 9: den Längsschnitt gemäß Figur 6 mit eingezeichneten Strömungsrichtungen,
- Figur 10: eine perspektivische Ansicht der Belüftungseinheit gemäß Figur 1 mit ausgeblendeter oberen Halbschale des Grundkörpers,
- Figur 11: eine Ausschnittvergrößerung aus Figur 10 und
- Figur 12: einen Ausschnitt einer weiteren perspektivischen Ansicht der Belüftungseinheit gemäß Figur 10.

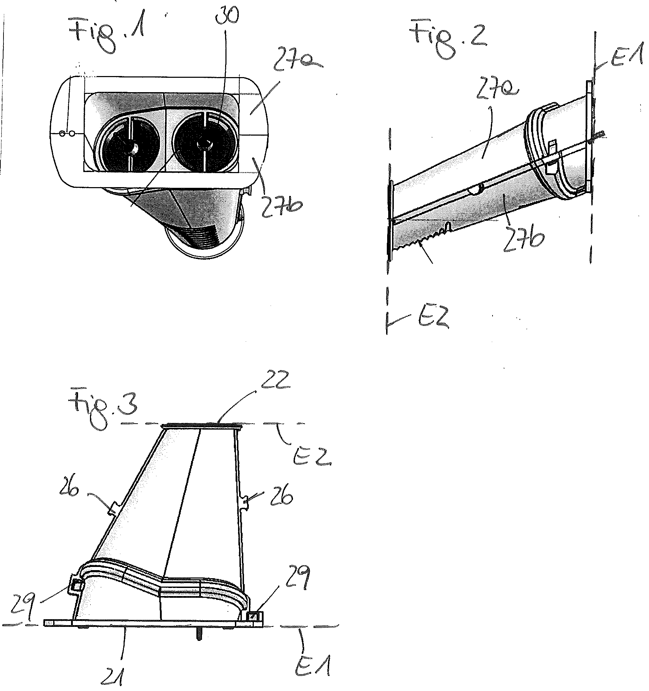

Die Figuren 1 bis 12 zeigen verschiedene Ansichten einer erfindungsgemäßen Belüftungseinheit 10 nach Anspruch 1 für einen Kälteschrank,
wobei zur besseren Übersicht nicht sämtliche Bezugszeichen in sämtlichen Figuren dargestellt sind.

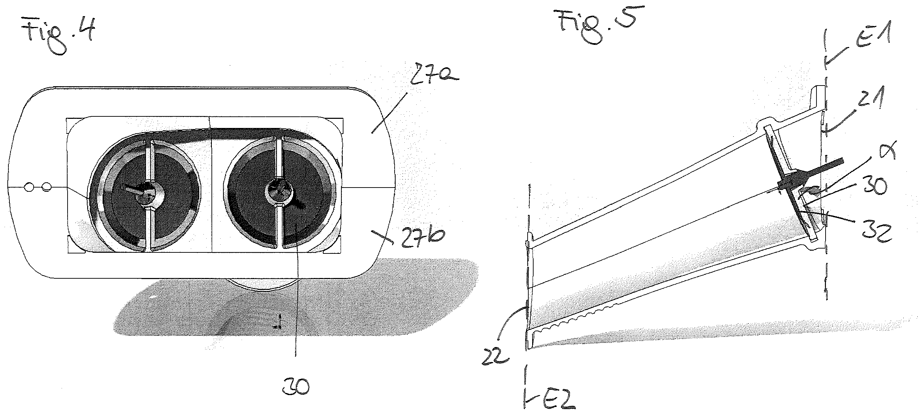

Die Belüftungseinheit 10 weist einen rohrförmigen Grundkörper 20 mit einer Innenseite 24, einer Außenseite 23, einem einlassseitigen Ende 20a und einem auslassseitigen Ende 20b auf, wobei an dem einlassseitigen Ende 20a eine Einlassöffnung 21 und an dem auslassseitigen Ende 20b eine Auslassöffnung 22 angeordnet ist. Die Einlassöffnung 21 ist in einer ersten stirnseitigen Ebene E1 und die Auslassöffnung 22 in einer zweiten stirnseitigen Ebene E2 angeordnet, wobei die erste stirnseitige Ebene E1 und die zweite stirnseitige Ebene E2 im Wesentlichen parallel versetzt zueinander angeordnet sind (vgl. insbesondere Figur 5).

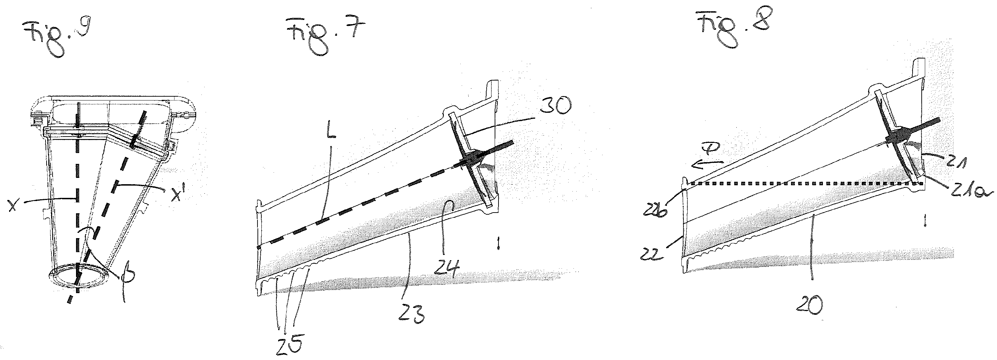

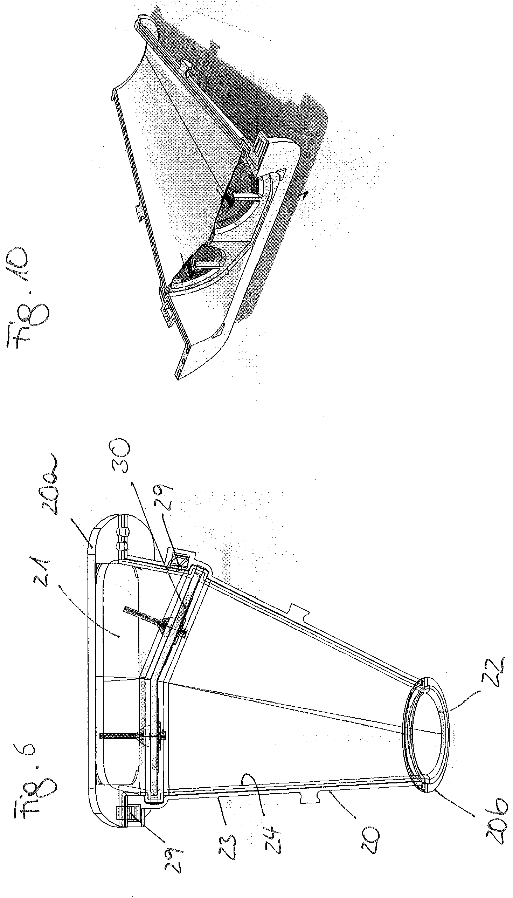

Der Grundkörper 20 ist derart sich verjüngend ausgebildet, dass die Einlassöffnung 21 eine größere Fläche aufweist als die Auslassöffnung 22 (vgl. insbesondere Figuren 3 und 6). Bei senkrechter Projektion der ersten stirnseitigen Ebene E1 auf die zweite stirnseitige Ebene E2, was wie in Figur 8 dargestellt parallel zu der Projektionsrichtung P erfolgen kann, sind die Einlassöffnung 21 und die Auslassöffnung 22 versetzt zueinander angeordnet sind. Mit anderen Worten überdeckt die Einlassöffnung 21 die Auslassöffnung 22 in der Projektion höchsten abschnittsweise. Besonders bevorzugt weisen die Einlassöffnung 21 und die Auslassöffnung 22 in der Projektion keine Schnittmenge auf. Diese Ausgestaltung illustriert Figur 8 dadurch, dass die untere Kante 21a der Einlassöffnung 21 oberhalb der oberen Kante 22b der Auslassöffnung angeordnet ist, so dass bei Projektion keine Schnittmenge entsteht.

Der Grundkörper 20 kann aus einem Kunststoff, insbesondere aus einem thermoplastischen Kunststoff, besonders bevorzugt aus Polypropylen, gefertigt sein. Vorzugsweise ist der Grundkörper 20 im Spritzgussverfahren gefertigt. Der Grundkörper 20 kann aus zwei Halbschalen 27a, 27b gefertigt sein wie beispielsweise in den Figuren 1 und 4 erkennbar. Die beiden Halbschalen 27a, 27b können nach der separaten Fertigung zu dem Grundkörper 20 zusammengefügt werden. Beispielsweise können sie mittels einer Rastverbindung 29, besonders bevorzugt mittels zweier Rastverbindungen 29, relativ zueinander fixiert werden. Dabei sind vorzugsweise die Rastverbindungen 29 im Bereich des einlassseitigen Endes 20a angeordnet.

Der Grundkörper 20 weist ein Heizelement auf, welches vorzugsweise als Heizdraht ausgebildet ist. Das Heizelement kann in einfacher Weise auf der Außenseite 23 angeordnet werden, beispielsweise, indem es auf der Außenseite 23 mehrfach um den Grundkörper gewickelt ist. Um eine Lagefixierung zu erreichen, kann das Heizelement in auf der Außenseite 23 angeordnete Rillen 25 eingelegt sein (vgl. Figur 7). An der Außenseite 23 können alternativ oder zusätzlich Vorsprünge 26 angeordnet sein (vgl. Figur 3), an welchen die Wickelrichtung des Heizelements geändert werden oder das Heizelement gespannt werden kann, damit dieser besser halten kann und ein Abrutschen vermieden werden kann. Ist der Grundkörper 20 aus zwei Halbschalen 27a, 27b zusammengesetzt, kann die Umwicklung der beiden Halbschalen 27a, 27b mit dem Heizelement die beiden Halbschalen 27a, 27b relativ zueinander fixieren.

In dem Grundkörper 20 ist wenigstens ein mechanisches Ventil 30 angeordnet, welches derart ausgebildet ist, dass es bei Überschreiten einer vorgegebenen Druckdifferenz zwischen dem einlassseitigen Ende 21 und dem auslassseitigen Ende 22 mit einem Unterdruck am auslassseitigen Ende 22 druckbedingt öffnet, einen Luftstrom vom auslassseitigen Ende 22 zum einlassseitigen Ende 21 jedoch unterbindet. Dadurch kann ein Unterdruck am auslassseitigen Ende 22 ausgeglichen werden, indem das Ventil 30 öffnet und Luft durch den Grundkörper 20 vom einlassseitigen Ende 21 durch das Ventil 30 zum auslassseitigen Ende 22 strömt.

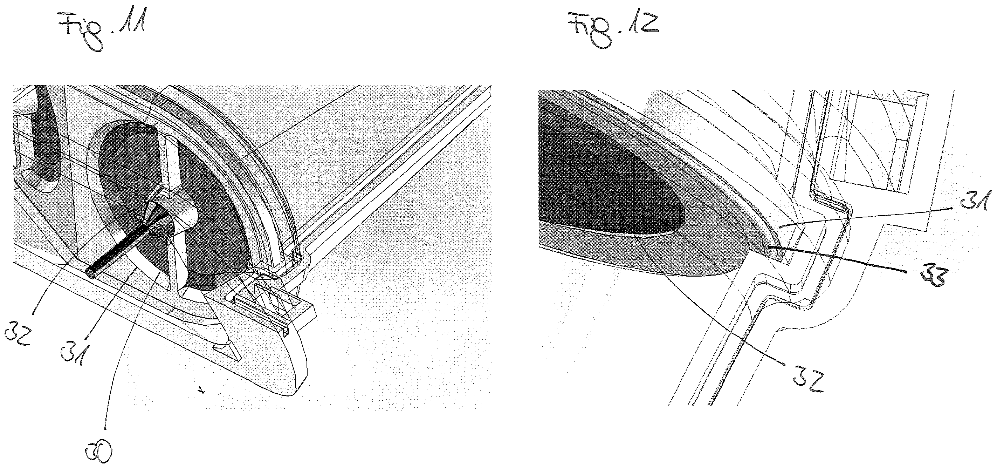

Das Ventil 30 kann einen Ventilsitz 31 und einen Ventilkörper 32 aufweisen, wobei der Ventilkörper 32 scheibenförmig ausgebildet ist. Der Ventilkörper 32 ist insbesondere als Schirmventil ausgebildet. Der Ventilkörper 32 kann aus Silikon gefertigt sein. Eine Dichtung 33 kann umlaufend am Ventilsitz 31 angeordnet sein (vgl. Figur 12). Das Ventil 30 ist dabei insbesondere näher zum einlassseitigen Ende 21 als zum auslassseitigen Ende 22 des Grundkörpers 20 angeordnet.

Wie insbesondere in Figur 5 erkennbar, kann der scheibenförmige Ventilkörper 32 gegen die erste stirnseitige Ebene E1 geneigt angeordnet sein. Der Neigungswinkel α kann im Bereich von 20° bis 40° betragen, beispielsweise etwa 30° (vgl. Figur 5). Der Grundkörper 20 kann eine Längsachse L aufweisen, und der scheibenförmige Ventilkörper 32 kann im Wesentlichen senkrecht zur Längsachse L angeordnet sein (vgl. Figur 7). Der Neigungswinkel a entspricht bei Einbau der Belüftungseinheit 10 in einen Kälteschrank derart, dass die Einlassöffnung 21 im Wesentlichen vertikal in einer Außenwandung des Kälteschranks und die Auslassöffnung im Wesentlichen horizontal in einer Innenwandung des Kälteschranks angeordnet ist, in etwa der Neigung des rohrförmigen Grundkörpers 20 gegen die Horizontale.

Der insbesondere als Schirmventil ausgebildete Ventilkörper 32 kann insbesondere vorgespannt gelagert in einer geschlossenen Position gehalten sein. Ist die durch eine Druckdifferenz zwischen dem einlassseitigen Ende 21 und dem auslassseitigen Ende 22 auf den Ventilkörper 32 wirkende Kraft größer als die Schließkraft des Schirmventils, wird der Ventilkörper 32 druckbedingt aus der geschlossenen Position in eine geöffnete Position überführt, in welcher Luft durch das Ventil 30 strömen kann und ein Druckausgleich herbeigeführt wird. Sobald der Differenzdruck kleiner wird oder sogar der Druckausgleich hergestellt ist, ist die auf den Ventilkörper 32 wirkende Kraft kleiner als die Schließkraft des Schirmventils, so dass das Ventil 30 wieder schließt.

Der Ventilkörper 32 kann eine Rotationsachse R aufweisen, welche im Wesentlichen parallel zur Luftströmungsrichtung durch den Grundkörper 20 ausgerichtet ist. Die Luftströmungsrichtung x kann der Längsachse L entsprechen.

Die Belüftungseinheit 10 kann mehr als ein Ventil 30 aufweisen. In dem dargestellten Ausführungsbeispiel weist die Belüftungseinheit 10 zwei Ventile 30, 30' auf. Das weitere Ventil 30' ist insbesondere wie das Ventil 30 ausgebildet. Das Ventil 30' weist eine Rotationsachse R' auf.

Die Rotationsachsen R, R' der beiden Ventilkörper 32 der beiden Ventile 30, 30' sind vorzugsweise nicht parallel zueinander ausgerichtet, sondern schneiden sich in einem Winkel β, vorzugsweise im Bereich der Auslassöffnung 22 (vgl. Figur 9), wobei vorzugsweise der Winkel β zwischen den beiden Rotationsachsen R, R' zwischen 15° und 35° beträgt. Bedingt durch die sich verjüngende Ausgestaltung des Grundkörpers 20 erhöht sich die Strömungsgeschwindigkeit der Luftströmung zum auslassseitigen Ende 22 hin. Durch die Anordnung der Rotationsachse R, R' der beiden Ventilkörper 32 im Winkel zueinander kann eine günstige Anströmung und Druckbeaufschlagung beider Ventilkörper 32 gleichermaßen erreicht werden. Dabei kann erreicht werden, dass beide Ventilkörper 32 der beiden Ventile 30, 30' jeweils im Wesentlichen senkrecht zu der durch die strömenden Luftströmungsrichtung x, x' ausgerichtet sind (vgl. Figur 9).

Die Belüftungseinheit 10 kommt insbesondere in einem Kälteschrank, beispielsweise einem Kühlschrank, einem Tiefkühlschrank oder einem Ultratiefkühlschrank zum Einsatz. Dabei kann die Belüftungseinheit 10 derart in einer Wandung des Kälteschranks eingebaut sein, dass die Einlassöffnung 21 zur Außenseite, das heißt zur warmem Seite, und die Auslassöffnung 22 zur Innenseite, das heißt zur kalten Seite, gerichtet sind, wobei die Auslassöffnung 22 in vertikaler Richtung weiter unten angeordnet ist als die Einlassöffnung 21 (vgl. Figur 5). Besonders bevorzugt ist die Auslassöffnung 22 vertikal unterhalb der Einlassöffnung 21 angeordnet.

### Bezugszeichenliste

- 10: Belüftungseinheit
- 20: Grundkörper
- 20a: einlassseitiges Ende
- 20b: auslassseitiges Ende
- 21: Einlassöffnung
- 22: Auslassöffnung
- 23: Außenseite
- 24: Innenseite
- 25: Rille
- 26: Vorsprung
- 27a: Halbschale
- 27b: Halbschale
- 29: Rastverbindung
- 30: Ventil
- 30': Ventil
- 31: Ventilsitz
- 32: Ventilkörper
- 33: Dichtung
- E1: erste stirnseitige Ebene
- E2: zweite stirnseitige Ebene
- P: Projektionsrichtung
- R: Rotationsachse
- R': Rotationsachse
- α: Neigungswinkel
- β: Winkel
- L: Längsachse
- x: Luftströmungsrichtung
- x': Luftströmungsrichtung

## Patentansprüche

1. Belüftungseinheit (10) für einen Kälteschrank mit einem rohrförmigen Grundkörper (20), wobei der Grundkörper (20) ein einlassseitiges Ende (20a) mit einer Einlassöffnung (21) und ein auslassseitiges Ende (20b) mit einer Auslassöffnung (22) aufweist, wobei der Grundkörper (20) derart sich verjüngend ausgebildet ist, dass die Einlassöffnung (21) eine größere Fläche aufweist als die Auslassöffnung (22), wobei die Einlassöffnung (21) in einer ersten stirnseitigen Ebene (E1) und die Auslassöffnung (22) in einer zweiten stirnseitige Ebene (E2) angeordnet sind, wobei die erste stirnseitige Ebene (E1) und die zweite stirnseitige Ebene (E2) im Wesentlichen parallel versetzt zueinander angeordnet sind, und wobei bei senkrechter Projektion der ersten stirnseitigen Ebene (E1) auf die zweite stirnseitige Ebene (E2) die Einlassöffnung (21) und die Auslassöffnung (22) versetzt zueinander angeordnet sind, und wobei in dem Grundkörper (20) wenigstens ein mechanisches Ventil (30, 30') angeordnet ist, **dadurch gekennzeichnet, dass** der Grundkörper (20) ein Heizelement aufweist, wobei das mechanische Ventil (30, 30') derart ausgebildet ist, dass es bei Überschreiten einer vorgegebenen Druckdifferenz zwischen dem einlassseitigen Ende (20a) und dem auslassseitigen Ende(20b) mit einem Unterdruck am auslassseitigen Ende (20b) druckbedingt öffnet, einen Luftstrom vom auslassseitigen Ende (20b) zum einlassseitigen Ende (20a) jedoch unterbindet.

2. Belüftungseinheit nach Anspruch 1,
**dadurch gekennzeichnet, dass** bei senkrechter Projektion der ersten stirnseitigen Ebene (E1) auf die zweite stirnseitige Ebene (E2) die Einlassöffnung (21) und die Auslassöffnung (22) derart versetzt zueinander angeordnet sind, dass sie keine Schnittmenge bilden.

3. Belüftungseinheit nach einem der vorhergehenden Ansprüche,
**dadurch gekennzeichnet, dass** das Ventil (30) einen Ventilsitz (31) und einen Ventilkörper (32) aufweist, wobei der Ventilkörper (32) scheibenförmig ausgebildet ist.

4. Belüftungseinheit nach einem der vorhergehenden Ansprüche,
**dadurch gekennzeichnet, dass** der scheibenförmige Ventilkörper (32) gegen die erste stirnseitige Ebene (E1) geneigt angeordnet ist.

5. Belüftungseinheit nach einem der vorhergehenden Ansprüche,
**dadurch gekennzeichnet, dass** der Grundkörper (20) eine Längsachse (L) aufweist, und der scheibenförmige Ventilkörper (32) im Wesentlichen senkrecht zur Längsachse (L) angeordnet ist.

6. Belüftungseinheit nach einem der vorhergehenden Ansprüche,
**dadurch gekennzeichnet, dass** der Ventilkörper (32) vorgespannt gelagert in einer geschlossenen Position gehalten ist.

7. Belüftungseinheit nach einem der vorhergehenden Ansprüche,
**dadurch gekennzeichnet, dass** der Ventilkörper (32) als Schirmventil ausgebildet ist.

8. Belüftungseinheit nach einem der vorhergehenden Ansprüche,
**dadurch gekennzeichnet, dass** der Ventilkörper (32) aus Silikon gefertigt ist.

9. Belüftungseinheit nach einem der vorhergehenden Ansprüche,
**dadurch gekennzeichnet, dass** der Ventilkörper (32) eine Rotationsachse (R)aufweist, welche im Wesentlichen parallel zur Luftströmungsrichtung (x) durch den Grundkörper (20) ausgerichtet ist.

10. Belüftungseinheit nach einem der vorhergehenden Ansprüche,
**dadurch gekennzeichnet, dass** in dem Grundkörper (20) zwei Ventile (30, 30') angeordnet sind.

11. Belüftungseinheit nach Anspruch 10,
**dadurch gekennzeichnet, dass** die Rotationsachsen (R, R') der Ventilkörper (32) der beiden Ventile (30, 30') nicht parallel zueinander ausgerichtet sind, wobei vorzugsweise der Winkel (β) zwischen den beiden Rotationsachsen (R, R') zwischen 15° und 35° beträgt.

12. Belüftungseinheit nach einem der vorhergehenden Ansprüche,
**dadurch gekennzeichnet, dass** das Heizelement auf der Außenseite (23) des Grundkörpers (20) angeordnet ist.

13. Belüftungseinheit nach einem der vorhergehenden Ansprüche,
**dadurch gekennzeichnet, dass** die Außenseite (23) des Grundkörpers (20) Strukturen zur Lagefixierung des Heizelements, insbesondere Rillen (25) und/oder Vorsprünge (26), aufweist.

14. Belüftungseinheit nach einem der vorhergehenden Ansprüche,
**dadurch gekennzeichnet, dass** das Heizelement als Heizdraht ausgebildet ist.

15. Belüftungseinheit nach einem der vorhergehenden Ansprüche,
**dadurch gekennzeichnet, dass** der Grundkörper (20) aus einem Kunststoff, insbesondere aus einem thermoplastischen Kunststoff, besonders bevorzugt aus Polypropylen, gefertigt ist, vorzugsweise im Spritzgussverfahren.

16. Belüftungseinheit nach einem der vorhergehenden Ansprüche,
**dadurch gekennzeichnet, dass** der Grundkörper (20) zwei Halbschalen (27a, 27b) umfasst.

17. Kälteschrank, insbesondere Kühlschrank, Tiefkühlschrank oder Ultratiefkühlschrank, mit einer Belüftungseinheit (10) nach einem der vorhergehenden Ansprüche.

18. Kälteschrank nach Anspruch 17,
**dadurch gekennzeichnet, dass** die Belüftungseinheit (10) derart in einer Wandung des Kälteschranks eingebaut ist, dass die Einlassöffnung (21) zur Außenseite und die Auslassöffnung (22) zur Innenseite des Kälteschranks gerichtet sind, wobei die Auslassöffnung (22) in vertikaler Richtung weiter unten angeordnet ist als die Einlassöffnung (21).

## Claims

1. Ventilation unit (10) for a cold chamber, having a tubular main body (20), wherein the main body (20) comprises, on the inlet side, an end (20a), which has an inlet aperture (21) and, on the outlet side, an end (20b), which has an outlet aperture (22), wherein the main body (20) is formed tapered in such a manner that the inlet aperture (21) comprises a larger surface than the outlet aperture (22), wherein the inlet aperture (21) is arranged in a first end face plane (E1) and the outlet aperture (22) is arranged in a second end face plane (E2), wherein the first end face plane (E1) and the second end face plane (E2) are arranged substantially parallel to and offset from each other, and wherein at least one mechanical valve (30, 30') is arranged in the main body (20),
**characterized in that** the main body (20) comprises a heating element, wherein the mechanical valve (30, 30') is implemented such that, when a specified difference in pressure between the end (20a) on the inlet side and end (20b) on the outlet side is exceeded, the mechanical valve (30, 30') is opened by means of a vacuum induced negative pressure, whereby air is nevertheless prevented from flowing from the end on the outlet side (20b) to the end on the inlet side (20a).

2. Ventilation unit in accordance with claim 1,
**characterized in that**, in the vertical projection of the first end face plane (E1) to the second end face plane (E2), the inlet aperture (21) and the outlet aperture (22) are arranged at such an offset from each other that they do not form an overlap.

3. Ventilation unit in accordance with either of the preceding claims,
**characterized in that** the valve (30) comprises a valve seating (31) and a valve body (32), wherein the valve body (32) is implemented in the shape of a disc.

4. Ventilation unit in accordance with any of the preceding claims,
**characterized in that** the disc-shaped valve body (32) is arranged inclined to the first end face plane (E1).

5. Ventilation unit in accordance with any of the preceding claims,
**characterized in that** the main body (20) comprises a longitudinal axis (L) and **in that** the disc-shaped valve body (32) is arranged substantially vertically to the longitudinal axis (L).

6. Ventilation unit in accordance with any of the preceding claims,
**characterized in that** the valve body (32) is mounted in a pretensioned manner in a closed position.

7. Ventilation unit in accordance with any of the preceding claims,
**characterized in that** the valve body (32) is implemented as an umbrella valve.

8. Ventilation unit in accordance with any of the preceding claims,
**characterized in that** the valve body (32) is made of silicone.

9. Ventilation unit in accordance with any of the preceding claims,
**characterized in that** the valve body (32) comprises an axis of rotation (R) which is aligned substantially parallel to the direction of the air flow (x) through the main body (20).

10. Ventilation unit in accordance with any of the preceding claims,
**characterized in that** two valves (30, 30') are arranged in the main body (20).

11. Ventilation unit in accordance with claim 10,
**characterized in that** the axes of rotation (R, R') of the valve bodies (32) of the two valves (30, 30') are not aligned parallel to each other, whereby the angle (β) between the two axes of rotation (R, R') is preferably between 15° and 35°.

12. Ventilation unit in accordance with any of the preceding claims,
**characterized in that** the heating element is arranged on the outer surface (23) of the main body (20).

13. Ventilation unit in accordance with any of the preceding claims,
**characterized in that** the outer surface (23) of the main body (20) comprises structuring, in particular ridges (25) and/or protrusions (26), for fixing the position of the heating element.

14. Ventilation unit in accordance with any of the preceding claims,
**characterized in that** the heating element is implemented as a heating wire.

15. Ventilation unit in accordance with any of the preceding claims,
**characterized in that** the main body (20) is made of a plastic material, in particular of a thermoplastic resin, particularly preferred of polypropylene, preferably in an injection molding process.

16. Ventilation unit in accordance with any of the preceding claims,
**characterized in that** the main body (20) comprises two half shells (27a, 27b).

17. Cold chamber, in particular a refrigerator, a freezer, or an ultra low temperature freezer having a ventilation unit (10) in accordance with any of the preceding claims.

18. Cold chamber in accordance with claim 17,
**characterized in that** the ventilation unit (10) is integrated in a wall of the cold chamber such that the inlet aperture (21) is directed to the outside and the outlet aperture (22) is directed to the inside of the cold chamber, wherein the outlet aperture (22) is arranged, in the vertical direction, further down than the inlet aperture (21).

## Revendications

1. Unité de ventilation (10) pour un réfrigérateur comprenant un corps de base tubulaire (20),
- le corps de base tubulaire (20) ayant une extrémité d'entrée (20a) avec un orifice d'entrée (21) et une extrémité de sortie (20b) avec un orifice de sortie (22),
- le corps de base (20) allant diminuant pour avoir un orifice d'entrée (21) de surface plus grande que celle de l'orifice de sortie (22),
- l'orifice d'entrée (21) étant dans un premier plan frontal (E1) et l'orifice de sortie (22) étant dans un second plan frontal (E2),
- le premier plan frontal (E1) et le second plan frontal (E2) étant décalés de manière pratiquement parallèle l'un à l'autre, et
- en projection verticale du premier plan frontal (E1) sur le second plan frontal (E2), l'orifice d'entrée (21) et l'orifice de sortie (22) sont décalés l'un par rapport à l'autre, et
- le corps de base (20) a au moins une soupape mécanique (30, 30'), unité de ventilation **caractérisée en ce que**
le corps de base (20) a un élément chauffant,
- la soupape mécanique (30, 30') est réalisée de façon qu'en cas de dépassement d'une différence de pression prédéfinie entre l'extrémité côté entrée (20a) et l'extrémité côté sortie (20b), elle s'ouvre sous l'effet de la pression pour une dépression à l'extrémité côté sortie (20b), et interdit le passage d'air de l'extrémité côté sortie (20b) vers l'extrémité côté entrée (20a).

2. Unité de ventilation selon la revendication 1,
**caractérisée en ce que**
pour une projection perpendiculaire du premier plan frontal (E1) sur le second plan frontal (E2), l'orifice d'entrée (21) et l'orifice de sortie (22) sont décalés l'un par rapport à l'autre sans intersection.

3. Unité de ventilation selon l'une des revendications précédentes,
**caractérisée en ce que**
la soupape (30) a un siège (31) et un corps de soupape (32), le corps de soupape (32) étant en forme de disque.

4. Unité de ventilation selon l'une des revendications précédentes,
**caractérisée en ce que**
le corps de soupape (32) en forme de disque est incliné par rapport au premier plan frontal (E1).

5. Unité de ventilation selon l'une des revendications précédentes,
**caractérisée en ce que**
le corps de base (20) a un axe longitudinal (L) et le corps de soupape en forme de disque (32) est pratiquement perpendiculaire à l'axe longitudinal (L).

6. Unité de ventilation selon l'une des revendications précédentes,
**caractérisée en ce que**
le corps de soupape (32) est monté en précontrainte dans une position fermée.

7. Unité de ventilation selon l'une des revendications précédentes,
**caractérisée en ce que**
le corps de soupape (32) est une soupape-écran.

8. Unité de ventilation selon l'une des revendications précédentes,
**caractérisée en ce que**
le corps de soupape (32) est fabriqué en silicone.

9. Unité de ventilation selon l'une des revendications précédentes,
**caractérisée en ce que**
le corps de soupape (32) a un axe de rotation (R) qui est pratiquement parallèle à la direction de passage d'air (x) à travers le corps de base (20).

10. Unité de ventilation selon l'une des revendications précédentes,
**caractérisée en ce que**
deux soupapes (30, 30') sont installées dans le corps de base (20).

11. Unité de ventilation selon la revendication 10,
**caractérisée en ce que**
- les axes de rotation (R, R') des corps (32) des deux soupapes (30, 30') ne sont pas orientés parallèlement l'un à l'autre, et
- de préférence l'angle (β) entre les deux axes de rotation (R, R') est compris entre 15° et 35°.

12. Unité de ventilation selon l'une des revendications précédentes,
**caractérisée en ce que**
l'élément chauffant est installé sur le côté extérieur (23) du corps de base (20).

13. Unité de ventilation selon l'une des revendications précédentes,
**caractérisée en ce que**
le côté extérieur (23) du corps de base (20) présente les structures pour la fixation de position de l'élément chauffant notamment des rainures (25) et/ou des reliefs (26).

14. Unité de ventilation selon l'une des revendications précédentes,
**caractérisée en ce que**
l'élément chauffant est sous la forme d'un fil chauffant.

15. Unité de ventilation selon l'une des revendications précédentes,
**caractérisée en ce que**
le corps de base (20) est en une matière plastique notamment en une matière thermoplastique et d'une manière particulièrement préférentielle en polypropylène, de préférence fabriqué par injection.

16. Unité de ventilation selon l'une des revendications précédentes,
**caractérisée en ce que**
le corps de base (20) a deux demi-coques (27a, 27b).

17. Réfrigérateur notamment armoire frigorifique, congélateur ou congélateur ultra-basse température équipé d'une unité de ventilation (10) selon l'une des revendications précédentes.

18. Réfrigérateur selon la revendication 17,
**caractérisé en ce que**
l'unité de ventilation (10) est installée dans la paroi du réfrigérateur pour que l'orifice d'entrée (21) soit orienté vers le côté extérieur et l'orifice de sortie (22) vers le côté intérieur du réfrigérateur,
l'orifice de sortie (22) étant installé plus bas selon la direction verticale que l'orifice d'entrée (21).
